# EUROPEAN PATENT APPLICATION

(11) **EP 4 749 901 A1**
(43) Date of publication of application: **27.05.2026**
(21) Application number: 25180228.6
(22) Date of filing: 02.06.2025
(51) Int. Cl.: H02M 1/32, H02M 1/36, H02M 7/483, H02P 3/22, H02M 7/487, H02M 1/00

(54) **METHOD AND DEVICE FOR CONTROLLING BRAKING DEVICE, AND BRAKING DEVICE**

(30) Priority: 21.11.2024 CN 202411676547
(71) Applicant: Vertiv New Energy Co., Ltd., 712000 Xi'An Shaanxi (CN)
(72) Inventor: WU, Hongjie, Xi'an, 712000 (CN); WANG, Gang, Xi'an, 712000 (CN); CHENG, Xinwei, Xi'an, 712000 (CN); PANG, Ting, Xi'an, 712000 (CN); CHENG, Guozhu, Xi'an, 710005 (CN); GUO, Yulong, Xi'an, 710005 (CN)
(74) Representative: Harden, Henry Simon

(57) **Abstract**

Provided are a method and a device for controlling a braking device, and a braking device, with which cost of a braking component of a multi-level inverter is reduced. The braking device includes a first braking component, a second braking component, and at least one third braking component. The first braking component, the at least one third braking component and the second braking component are connected in series. The first braking component is connected in parallel to a first bus capacitor in the inverter, the second braking component is connected in parallel to the last bus capacitor in the inverter, and each third braking component is connected in parallel to two bus capacitors in the inverter. The first braking component and the second braking component include a bridge arm. An upper bridge arm of the first braking component is a diode, a lower bridge arm of the second braking component is a diode, and braking resistors are connected in parallel to the diodes. Each third braking component includes a first bridge arm and a second bridge arm connected in series. A lower bridge arm of the first bridge arm is a diode, an upper bridge arm of the second bridge arm is a diode, and at least one braking resistor is connected in parallel between the lower bridge arm of the first bridge arm and the upper bridge arm of the second bridge arm.

## Description

### CROSS-REFERENCE TO RELATED APPLICATIONS

This application claims the priority benefit of Chinese Patent Application No. 202411676547.3, filed on November 21, 2024 in the China National Intellectual Property Administration, the disclosure of which is incorporated herein in its entirety by reference.

### FIELD

The present disclosure relates to the technical field of power electronics, and in particular to a method and a device for controlling a braking device, and a braking device.

### BACKGROUND

At present, multi-level technology is widely used in various power electronic products with inverters due to its low switching loss, high efficiency, low output harmonic content, and other advantages.

In a case where a power supply or a load connected to the inverter fails, a bus voltage rises and may cause device damage in severe cases. Generally, a braking component is configured in the inverter. The braking component can dissipate bus power as the bus voltage rises, thereby reducing the bus voltage. In a conventional technology, one braking resistor and a half-bridge module formed through multiple switching transistors are usually configured for both ends of each bus capacitor. As a bus voltage rises due to a power failure, the half-bridge module may realize an electrical connection between a DC bus and a braking resistor. The braking resistor dissipates electricity on the DC bus, so that damage to the inverter and a device connected to the inverter due to overvoltage is avoided. However, during the operation of the braking component, only part of the switching transistors operates, resulting in a reduced utilization of components inside the braking component and an increased cost of the braking component.

### SUMMARY

An objective of the present disclosure is to provide a method and a device for controlling a braking device, and a braking device, with which cost of a braking component of a multi-level inverter is reduced and a volume of the braking device is reduced.

In a first aspect, a braking device is provided in the present disclosure. The braking device is applicable to a multi-level inverter having multiple bus capacitors, and is connected in parallel to the multiple bus capacitors in the inverter. The braking device may include a first braking component, a second braking component, and at least one third braking component. The first braking component, the at least one third braking component, and the second braking component are connected in series.

Specifically, the first braking component is connected in parallel to a first bus capacitor in the inverter, the second braking component is connected in parallel to the last bus capacitor in the inverter, and each third braking component is connected in parallel to two bus capacitors in the inverter other than the first bus capacitor and the last bus capacitor. The first braking component and the second braking component include a bridge arm formed by a switching transistor and a diode connected in series. An upper bridge arm of the first braking component is a diode, a lower bridge arm of the second braking component is a diode, a braking resistor is connected in parallel to the diode in the first braking component, and a braking resistor is connected in parallel to the diode in the second braking component. Each third braking component includes a first bridge arm and a second bridge arm connected in series. A lower bridge arm of the first bridge arm is a diode, an upper bridge arm of the second bridge arm is a diode, and at least one braking resistor is connected in parallel between the lower bridge arm of the first bridge arm and the upper bridge arm of the second bridge arm.

With the above solution, the inverter is a multi-level inverter with multiple bus capacitors. Compared with a configuration that each bus capacitor is provided with a half-bridge module with multiple switching transistors and a braking resistor, each bus capacitor in the present disclosure only needs to be configured with one switching transistor. In this way, the number of switching transistor devices is reduced, a utilization rate of the switching transistor is improved. In addition, reduction of the number of switching transistors is further beneficial to reducing a wiring difficulty and a wiring area of the braking device.

In a possible design, the first braking component includes a first diode, a first braking resistor and a first switching transistor. A cathode of the first diode is connected to a first terminal of the first bus capacitor and a first terminal of the first braking resistor; an anode of the first diode is connected to a first terminal of the first switching transistor and a second terminal of the first braking resistor; and a second terminal of the first switching transistor is connected to a second terminal of the first bus capacitor.

In a possible design, the second braking component includes a second switching transistor, a second diode and a second braking resistor. A first terminal of the second switching transistor is connected to a first terminal of the last bus capacitor, and a second terminal of the second switching transistor is connected to a cathode of the second diode. The cathode of the second diode is connected to a first terminal of the second braking resistor, and an anode of the second diode is connected to a second terminal of the second braking resistor and a second terminal of the last bus capacitor.

In a possible design, each third braking component includes a third switching transistor, a third diode, a fourth diode, a fourth switching transistor and a third braking resistor.

A first terminal of the third switching transistor is connected to a first terminal of the first bus capacitor of the two bus capacitors connected in parallel to the third braking component, and a second terminal of the third switching transistor is connected to a cathode of the third diode. A cathode of the fourth diode is connected to an anode of the third diode, and an anode of the fourth diode is connected to a first terminal of the fourth switching transistor. A second terminal of the fourth switching transistor is connected to a second terminal of the second bus capacitor of the two bus capacitors connected in parallel to the third braking component. A first terminal of the third braking resistor is connected to a cathode of the third diode, and a second terminal of the third braking resistor is connected to the anode of the fourth diode.

With the above design, for the braking component connected in parallel to DC buses other than the first DC bus and the last DC bus, it may be configured that one braking resistor performs a voltage regulation function for two bus capacitors. Hence, the wiring difficulty of the braking device is reduced, and the volume of the braking device is reduced. In addition, for a scenario where there is an unbalanced DC bus, the braking resistor may be implemented with a three-port voltage-regulating resistor device, such as a sliding resistor. In this way, the voltage regulation requirement of a single DC bus can be satisfied while reducing the amount of wiring.

In a possible design, the third braking resistor may be implemented with a sliding resistor or other resistor devices having three ports. In this case, the third braking resistor further includes a third terminal, that is, a middle port of the sliding resistor. The third terminal of the third braking resistor is connected to a middle node of two bus capacitors connected in parallel to the third braking component. With the sliding resistor, braking requirements of two bus capacitors can be satisfied without configuring a connection wire between two resistors, so that the number of wirings and wiring difficulty of the braking device can be further reduced.

In a possible design, for a scenario where a DC bus needs to be braked separately, each third braking component further includes a fourth braking resistor, the fourth braking resistor is connected between the second terminal of the third braking resistor and the anode of the fourth diode, and the second terminal of the third braking resistor is connected to a middle node of two bus capacitors connected in parallel to the third braking component.

In a second aspect, a method for controlling a braking device is provided in an embodiment of the present disclosure. The method for controlling a braking device is applicable to an inverter equipped with a braking device. The method is executable by a controller of the braking device or a controller of a power circuit in the inverter. The method specifically includes the following steps:

detecting a bus voltage and an operating state of an inverter, where the operating state includes a fault operating state and a normal operating state; on detecting that the bus voltage is greater than a first preset threshold and the inverter is in the fault operating state, controlling a corresponding braking component in the inverter to work; and, on detecting that the bus voltage is greater than a second preset threshold and the inverter is in the normal operating state, controlling a corresponding braking component in the inverter to work, where the first preset threshold is greater than the second preset threshold.

With the above design, during the operation of the inverter, a power supply or load failure may cause the bus voltage to rise, and control of the power circuit or other reasons may cause the bus voltage to be unbalanced beyond its normal voltage interval. When it is detected that the bus voltage is unbalanced due to a power supply or load failure connected to the inverter, the inverter may be operated exceeding the normal bus voltage interval. In this way, frequent start of the braking device can be avoided, and protection is provided when the bus voltage rises due to an error in a control strategy.

In a possible design, the method further includes: on detecting that the bus voltage is less than a third preset threshold, controlling a corresponding braking component in the inverter to stop working.

In a possible design, on detecting that the bus voltage is greater than a first preset threshold and the inverter is in the fault operating state, the controlling of a corresponding braking component in the inverter to work, comprises:
detecting a voltage of each bus capacitor in the inverter; and controlling a braking component connected to a target bus capacitor to work, on detecting that a voltage across the target bus capacitor is greater than the first preset threshold and the inverter is in the fault operating state. With the above design, in a case where the bus voltage is unbalanced due to a fault or an error in a control strategy, some bus capacitors may have normal voltage while some bus capacitors may have unbalanced voltage. An individual braking component may be controlled to work so as to achieve individual adjustment on the voltage of some bus capacitors.

In a third aspect, a device for controlling a braking device is provided in an embodiment of the present disclosure. The control device includes: at least one processor; and a memory communicatively connected to the at least one processor; where the memory stores instructions executable by the at least one processor, and the instructions are executed by the at least one processor to enable the at least one processor to perform the method as provided in any possible design in the second aspect of the present disclosure.

In addition, the technical effects brought by the third aspect and any possible design thereof may be referred to the technical effects brought by the different designs in the first and second aspects of the embodiments of the present disclosure, and are not described in further detail here.

### BRIEF DESCRIPTION OF THE DRAWINGS

For clearer illustration of the technical solutions according to embodiments of the present disclosure, hereinafter briefly described are the drawings to be applied in embodiments of the present disclosure. Apparently, the drawings in the following descriptions are only some embodiments of the present disclosure, and other drawings may be obtained by those skilled in the art based on the provided drawings without any creative effort.
Figure 1 is a schematic structural diagram of a braking device according to a conventional technology;
Figure 2 is a first schematic structural diagram of a braking device according to an embodiment of the present disclosure;
Figure 3 is a schematic diagram of packaging of internal components of a braking component according to an embodiment of the present disclosure;
Figure 4 is a schematic diagram of driving a switching transistor according to an embodiment of the present disclosure;
Figure 5 is a first schematic structural diagram of a third braking component according to an embodiment of the present disclosure;
Figure 6 is a second schematic structural diagram of a third braking component according to an embodiment of the present disclosure;
Figure 7 is a third schematic structural diagram of a braking device according to an embodiment of the present disclosure;
Figure 8 is a schematic flowchart of a method for controlling a braking device according to an embodiment of the present disclosure;
Figure 9 is a schematic structural diagram of a device for controlling a braking device according to an embodiment of the present disclosure.

### DETAILED DESCRIPTION

Hereinafter, embodiments of the present disclosure are described in conjunction with the accompanying drawings.

Terms used in the embodiments of the present disclosure are only for explaining the specific embodiments of the present disclosure, and are not intended to limit the present disclosure. Apparently, the embodiments described below are only some embodiments, rather than all the embodiments of the present disclosure. Any other embodiments obtained by those skilled in the art based on the embodiments in the present disclosure without any creative effort shall fall within the protection scope of the present disclosure.

An application scenario of a braking device in the embodiments of the present disclosure is described in detail below with reference to the accompanying drawings.

The braking device provided in an embodiment of the present disclosure may be applied to an inverter having multiple bus capacitors, and may be configured to start when a voltage of a bus capacitor exceeds a normal voltage interval, and dissipate power on the bus capacitor through an internal braking resistor, thereby reducing a bus voltage and restoring the bus voltage to the normal voltage interval.

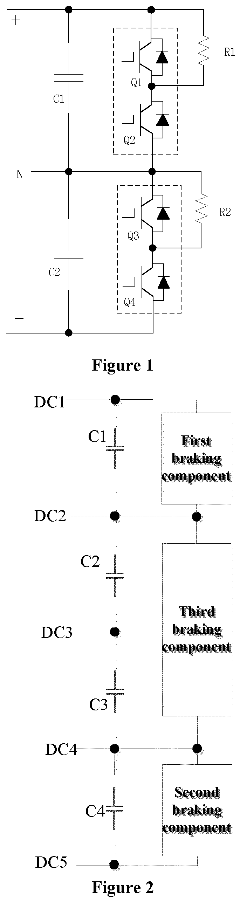

Reference is made to Figure 1, which is a schematic structural diagram of a braking device applied with a three-level inverter. As shown in Figure 1, a braking component includes a first bridge arm and a second bridge arm connected in series, and braking resistors R1 and R2 connected in parallel to an upper bridge arm of each bridge arm. The first bridge arm is formed by a switching transistor Q1 and a switching transistor Q2 connected in series, and the second bridge arm is formed by a switching transistor Q3 and a switching transistor Q4 connected in series. When the braking component is required to operate, the switching transistor in the bridge arm may be switched on to form an electrical connection between the bus capacitor and the braking resistor. As the braking component is started, in an example where the first bridge arm operates, the switching transistor Q1 of the upper bridge arm and the switching transistor Q2 of the lower bridge arm do not work, but the parasitic diodes of the two switching transistors work and form an energy-consuming branch with the braking resistor R1. In this case, the utilization rate of the switching transistor in the braking component is reduced. With such switching device, a wiring difficulty and wiring area of the inverter is increased.

Based on the above problems, embodiments of the present disclosure provide a method and a device for controlling a braking device, and a braking device, with which cost of a braking component of a multi-level inverter is reduced and a volume of the inverter is reduced.

Reference is made to Figure 2, which is a schematic structural diagram of a braking device according to an embodiment of the present disclosure. As shown in Figure 2, the braking device may be applied to a multi-level inverter having multiple bus capacitors. The braking device includes at least a first braking component, a second braking component and at least one third braking component. The first braking component, the at least one third braking component, and the second braking component are connected in series.

Specifically, the first braking component is connected in parallel to a first bus capacitor in the inverter, the second braking component is connected in parallel to the last bus capacitor in the inverter, and each third braking component is connected in parallel to two bus capacitors in the inverter other than the first bus capacitor and the last bus capacitor. The first braking component and the second braking component include a bridge arm formed by a switching transistor and a diode connected in series. An upper bridge arm of the first braking component is a diode, a lower bridge arm of the second braking component is a diode, and a braking resistor is connected in parallel to the diode in the first braking component, and a braking resistor is connected in parallel to the diode in the second braking component. Each third braking component includes a first bridge arm and a second bridge arm connected in series. A lower bridge arm of the first bridge arm is a diode, an upper bridge arm of the second bridge arm is a diode, and at least one braking resistor is connected in parallel between the lower bridge arm of the first bridge arm and the upper bridge arm of the second bridge arm.

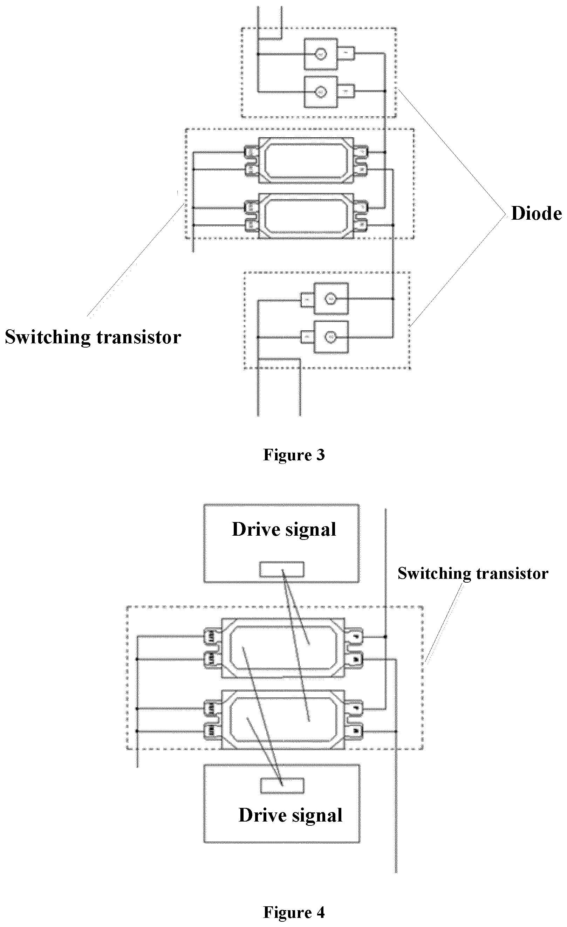

In an actual application, the diode and the switching transistor in the above-mentioned braking component may be electrically connected using a laminated busbar or a copper busbar, and the number of diodes and switching transistors in the braking component may be configured based on an application scenario of the inverter. For example, in a case where an inverter is applied in a high-power power supply scenario, since a current allowed to flow through a single diode and switching transistor is limited, multiple diodes and multiple switching transistors may be configured in the braking component in order to meet a large current transmission requirement during braking. The diodes and the switching transistors are connected in parallel. Each diode and each switching transistor may be packaged separately, as shown in Figure 3. Alternatively, multiple parallel-connected diodes may be packaged as an integral device, and multiple parallel-connected switching transistors may be packaged as an integral device, for example, as a 62mm package, an Econodual package, or a PrimePACK package.

The braking device provided in the embodiment of the present disclosure is applicable to an inverter having multiple bus capacitors. An input terminal of the inverter is connected to an AC power supply, converts an AC power outputted by the AC power supply into a DC power, and outputs the DC power to a device connected at the back end, thereby powering the device connected at the back end. Multiple braking components in the braking device are connected in series with each other and then connected in parallel to the bus capacitor in the inverter, so that each bus capacitor or two adjacent bus capacitors in the inverter is configured with one braking component. Each braking component is provided with a braking resistor. When a bus voltage rises due to an AC power failure or a controller control logic, the bus capacitor may be electrically connected to the braking resistor, so that the braking resistor dissipates power of the bus capacitor to avoid damage to the device due to the high voltage, until the AC power failure is eliminated and the bus voltage returns to normal.

Specifically, each braking component is configured with a switching transistor, and the switching device may control the connection between the bus capacitor and the braking resistor. The braking device may be provided with a controller or control device connected to a controller in the inverter, and the controller may be connected to the switching device directly or through a driving circuit. As shown in Figure 4, the controller drives the switching device to turn on or turn off by sending a driving signal. Since the braking component is configured for protecting safety of the circuit when the bus voltage rises, the switching device can be turned on when the bus voltage rises, so that the braking resistor is connected to the bus capacitor and dissipates power of the bus capacitor, thereby reducing the bus voltage and preventing the inverter and devices connected to the inverter from being damaged due to the high voltage.

In an actual application, the controller sends driving signals to respective switching transistors to control on/off of the switching transistors. Therefore, the PCB where the driving device is located needs to be configured with a driving cable between the controller and each of the switching transistors. In order to reduce the length of the driving cable, the driving PCB where the controller is located needs to be installed above or, as close as possible to, the PCB where the switching transistor is located. The drive cable may be implemented in a form of a single board socket for direct plugging or a flexible PCB.

In the braking device as shown in Figure 2, each bridge arm in the braking component connected to the bus capacitor is formed by a diode and a switching transistor, and operation of the braking component is realized through the switching transistor. Compared to a braking component formed by two switching transistors connected in series according to the conventional technology, a utilization rate of the switching transistor is increased in the present disclosure. In addition, as the diode is a unidirectional conductive device, there is no need to configure a control circuit, which is beneficial to reducing a wiring difficulty of the braking component, thereby reducing a volume of the braking component.

In a practical application, in order to reduce the wiring difficulty of the braking device, for bus capacitors in the multi-level inverter other than the first bus capacitor and the last bus capacitor, one third braking component may be reused through two adjacent bus capacitors, and the braking resistor in the third braking component can meet the braking requirements of two bus capacitors. For example, the braking resistor in the third braking component may be a sliding resistor, and a second terminal and a first terminal of the sliding resistor may be connected to the first bus capacitor through the first bridge arm, and the second terminal and a third terminal of the sliding resistor may be connected to the second bus capacitor through the second bridge arm. Therefore, the braking resistor corresponding to the two bus capacitors only need to be configured with three ports. Compared with configuring a braking resistor with two external interfaces for each bus capacitor, the number of connecting wires of two braking resistors and the number of connecting wires between the braking resistor and the bus capacitor can be reduced, which is beneficial to reducing the wiring difficulty of the braking device and thereby reducing the volume of the braking resistor.

In some embodiments, since the device at the connection between two adjacent braking components is a switching transistor, that is, two switching transistors are connected in series, in order to reduce the wiring difficulty of the braking device, the two switching transistors may be packaged into one half-bridge module. A first terminal of the first switching transistor and a second terminal of the second switching transistor serve as AC ports of the half-bridge module, and the connection terminal between the first switching transistor and the second switching transistor is a neutral point of the half-bridge module. In this case, the half-bridge module is configured with only three external interfaces, and the PCB board where the braking device is located needs to be configured with only connecting wires for the three interfaces. Hence, the wiring difficulty of the braking device can be further reduced.

The structure of various braking components in the braking device is described below in conjunction with embodiments.

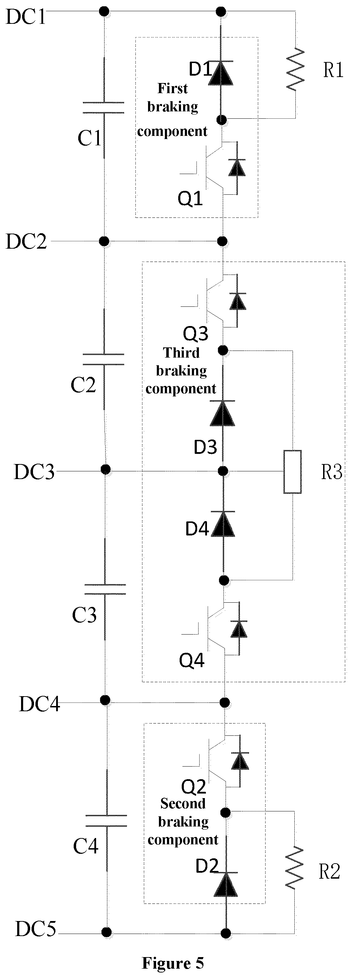

In a possible implementation, as shown in Figure 5, the first braking component includes a first diode D1, a first braking resistor R1 and a first switching transistor Q1; the second braking component includes a second switching transistor Q2, a second diode D2 and a second braking resistor R2; and each third braking component includes a third switching transistor Q3, a third diode D3, a fourth diode D4, a fourth switching transistor Q4 and a third braking resistor R3. To facilitate understanding of the technical solution intended to be protected in the present disclosure, description is made with an example in which the inverter is a five-level inverter.

Specifically, a cathode of the first diode D1 is connected to a first terminal of the first bus capacitor C1 and a first terminal of the first braking resistor R1; an anode of the first diode D1 is connected to a first terminal of the first switching transistor Q1 and a second terminal of the first braking resistor R1; and a second terminal of the first switching transistor Q1 is connected to a second terminal of the first bus capacitor C1. A first terminal of the second switching transistor Q2 is connected to a first terminal of the last bus capacitor C4, and a second terminal of the second switching transistor Q2 is connected to a cathode of the second diode D2. The cathode of the second diode D2 is connected to a first terminal of the second braking resistor R2, and an anode of the second diode D2 is connected to a second terminal of the second braking resistor R2 and a second terminal of the last bus capacitor C4. A first terminal of the third switching transistor Q3 is connected to a first terminal of the first bus capacitor C2 of the two bus capacitors connected in parallel to the third braking component, and a second terminal of the third switching transistor Q3 is connected to a cathode of the third diode D3. A cathode of the fourth diode D4 is connected to an anode of the third diode D3, and an anode of the fourth diode D4 is connected to a first terminal of the fourth switching transistor Q4. A second terminal of the fourth switching transistor Q4 is connected to a second terminal of the second bus capacitor C3 of the two bus capacitors connected in parallel to the third braking component. A first terminal of the third braking resistor R3 is connected to a cathode of the third diode D3, a second terminal of the third braking resistor R3 is connected to the anode of the fourth diode D4, and a third terminal of the third braking resistor R3 is connected to a middle node of the two bus capacitors connected in parallel to the third braking component.

In an example, in order to brake the bus capacitors separately while the number of wirings of the braking resistor is reduced, the third braking resistor R3 may be a resistor having three output ports. The third terminal of the third braking resistor R3 is connected to the middle node of the two bus capacitors connected in parallel to the third braking component. For example, the third braking resistor R3 is a sliding resistor, and a first terminal and a third terminal of the sliding resistor are connected to a resistance wire for providing a braking resistance for the bus capacitor C2, and a second terminal and the third terminal of the sliding resistor provide a sliding resistance for the bus capacitor C3. When the bus capacitor C2 and the bus capacitor C3 perform braking, a current during the braking process flows through the third port of the sliding resistor, thereby realizing reuse of the port and a connection wire of the port. In this way, the number of wirings of the braking device is reduced, which is beneficial to reducing the cost of the braking device and reducing the volume of the braking device.

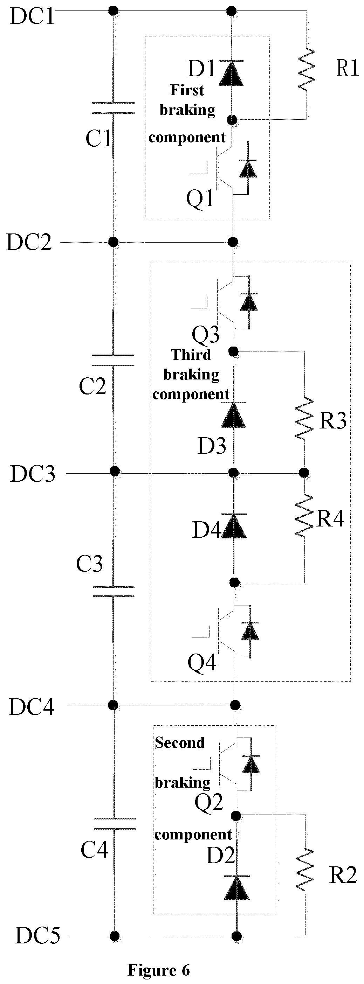

In an example, in order to realize independent braking of two bus capacitors, each third braking component includes a fourth braking resistor R4 in addition to the third braking resistor R3. As shown in Figure 6, the fourth braking resistor R4 is connected between the second terminal of the third braking resistor R3 and the anode of the fourth diode D4. The second terminal of the third braking resistor R3 is connected to the second terminal of the first bus capacitor C2 of two bus capacitors connected in parallel to the third braking component. The third braking resistor R3 and the fourth braking resistor R4 may be packaged as an integral device, and the first terminal of the third braking resistor R3, the second terminal of the third braking resistor R3 and a third terminal of the fourth braking resistor R4 serve as three external interfaces of the device.

It should be noted that the switching transistors in the braking component shown in Figure 2 to Figure 6 may be voltage-type switching transistors. Each of the switching transistors is configured with a control port. The controller may be connected to the control port of the switching transistor and control on/off of the switching transistor by providing a corresponding level signal to the control port. For example, in a case where the switching transistor is a MOSFET, a control terminal of the switching transistor serves as a gate, and the first terminal and the second terminal of the switching transistor serve as a drain and a source respectively. Alternatively, the switching transistor may be implemented by other voltage-type drive switching transistors, and the two switching transistors may be implemented by different types of switches, which are not limited more in the present disclosure.

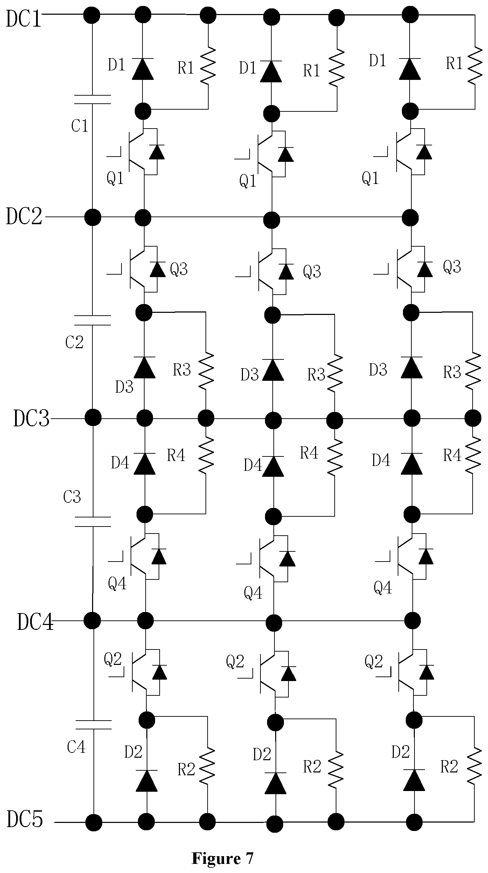

The above introduction to the braking device is only an example. In an actual application, the braking device may have other structures. For example, inverters with different power levels have different braking requirements. According to a power level of an inverter, a multi-parallel architecture may be configured, that is, multiple sets of the first braking component, the second braking component and the third braking component may be configured in parallel. For example, Figure 7 shows a structure of the braking device configured with three sets of parallel braking components. Apparently, devices in the braking device may be implemented through other devices having the above-mentioned functions, which is not limited in the present disclosure here.

Based on the same inventive concept, an embodiment of the present disclosure further provides an inverter. The inverter may include a power circuit, multiple bus capacitors and the braking device as described above. An input terminal of the power circuit is externally connected to an AC power supply. The power circuit has multiple output terminals. A first output terminal of the power circuit is connected to a first terminal of one bus capacitor among the multiple bus capacitors, a second output terminal of the power circuit is connected to a second terminal of the first bus capacitor, and similarly, the last output terminal of the power circuit is connected to a second terminal of the last bus capacitor among the multiple bus capacitors. The braking device is connected in parallel to multiple bus capacitors.

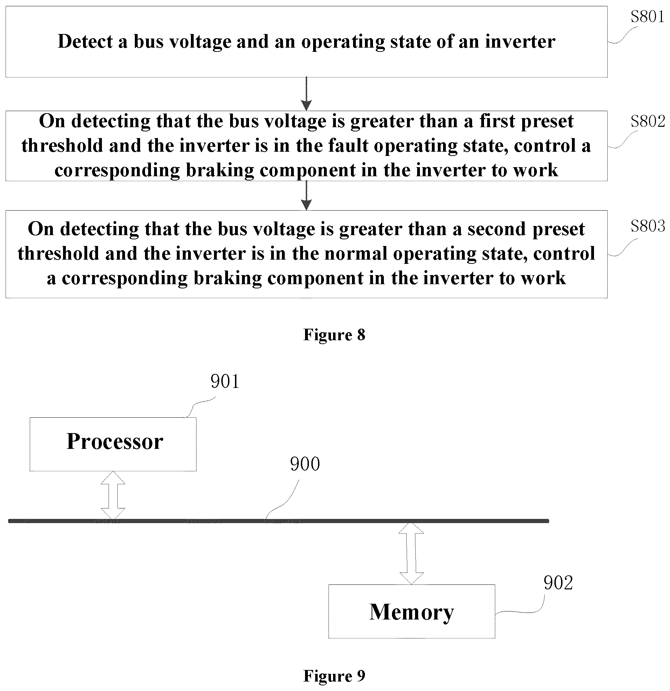

Based on the above introduction of the structure of the braking device, a working process of the braking device is described in detail below in combination with the structure of the braking device. A control process of the braking device may be executed by an internal controller of the braking device or a controller of the inverter. As shown in Figure 8, the control process mainly includes the following steps S801 to S803.

In step S801, a bus voltage and an operating state of the inverter are detected. The operating state includes a fault operating state and a normal operating state.

In an actual application, the device where the inverter is located is generally equipped with a monitoring system. The monitoring system may detect an operating parameter of the inverter and an operating parameter of an AC power supply connected to the inverter, and determine the operating state of the inverter based on the above-mentioned operating parameters. For example, it is determined that the inverter is in the fault operating state, on detecting that a voltage outputted by the AC power supply connected to the inverter exceeds a rated voltage of the AC power supply. The operating parameter includes, but is not limited to, voltage, current and power.

In step S802, on detecting that the bus voltage is greater than a first preset threshold and the inverter is in the fault operating state, a corresponding braking component in the inverter is controlled to work.

Specifically, since the inverter has multiple bus capacitors, a bus voltage can be outputted across each bus capacitor, and the bus voltage across each bus capacitor may be detected. In a case where the bus voltage across any of the bus capacitors is detected being greater than the first preset threshold and the inverter is in the fault operating state, the corresponding braking component in the inverter is controlled to work.

It should be noted that the above description is based on an example in which the bus capacitors have the same rated voltage. In a case where the rated voltages over the bus capacitors are different during normal operation, it is necessary to configure the first preset threshold differently for the bus capacitors and apply the first preset threshold as a condition for starting a braking component connected in parallel to the bus capacitor, so as to avoid mis-conduction of the braking component.

In an actual application, when the AC power connected to the inverter fails, before the fault of the AC power is eliminated, even if the braking component connected to the bus capacitor adjusts the bus voltage to the normal operating voltage interval, the bus voltage still rises after the braking component stops working. In order to avoid frequent start and shutoff of the braking device, the first preset threshold may be set to be greater than a stable working voltage of the bus capacitor, so that the braking device can be started frequently until the fault of the AC power is eliminated. For example, a bus voltage interval corresponding to a normal operation of the bus capacitor is [800V, 900V], and the first preset threshold may be set to 1200V.

In step S803, on detecting that the bus voltage is greater than a second preset threshold and the inverter is in the normal operating state, a corresponding braking component in the inverter is controlled to work. The first preset threshold is greater than the second preset threshold. The second preset threshold may be set to a maximum of a normal working interval of the bus capacitor. Apparently, the second preset threshold may be set to other values. For example, the device where the inverter is located is equipped with a display panel, and the first preset threshold may be configured through a touch screen signal received by the display panel.

In an actual application, the above steps are a working process of the braking component when it is detected that the bus voltage rises abnormally. When the bus voltage is in a normal working interval, it is necessary to control the braking component to stop working, to prevent the bus voltage from being excessively low.

Specifically, on detecting that the bus voltage is less than a third preset threshold, a corresponding braking component in the inverter is controlled to stop working.

Based on the same inventive concept, a device for controlling a braking device is further provided in an embodiment of the present disclosure. The control device executes the method for controlling a braking device as described above. As shown in Figure 9, the device for controlling a braking device includes:

at least one processor 901, and a memory 902 connected to the at least one processor 901. A specific connection medium between the processor 901 and the memory 902 is not limited in the embodiment of the present disclosure. Figure 9 provides an example in which the processor 901 is connected to the memory 902 via a bus 900. The bus 900 is represented in Figure 9 as a thick line, and a connection between other components is only described for illustrative purposes and is not intended to be limiting. The bus 900 may include an address bus, a data bus, a control bus, and the like. For ease of representation, the bus is shown in Figure 9 as only one thick line, which does not mean that there is only one bus or one type of bus. Alternatively, the processor 901 may be referred to as a controller, the name of which is not limited.

In an embodiment of the present disclosure, the memory 902 stores instructions executable by the at least one processor 901. The at least one processor 901 may perform the method for controlling a braking device discussed above by executing the instructions stored in the memory 902.

The processor 901 is a control center of the device, and may connect various parts of the control device by using various interfaces and wires. By running or executing the instructions stored in memory 902 and calling data stored in memory 902, various functions of the device and processing data, the device is monitored by the processor.

The processor 901 may be a general-purpose processor such as a central processing unit (CPU), a digital signal processor, a dedicated integrated circuit, a field programmable gate array or other programmable logic device, a discrete gate circuit or transistor logic device, or a discrete hardware component, and is able to implement or perform the method, steps, and logic block diagrams disclosed in the embodiments of the present disclosure. The general-purpose processor may be a microprocessor or any conventional processor. The steps of the method for controlling a braking device disclosed in conjunction with the embodiments of the present disclosure may be directly embodied and executed by a hardware processor, or be executed by a combination of hardware and a software module in the processor.

The memory 902 is a non-volatile computer-readable storage medium that may be configured to store non-volatile software programs, non-volatile computer executable programs, and modules. The memory 902 may include at least one type of storage medium, for example, a flash memory, a hard disk, a multimedia card, a card-type memory, a random-access memory (RAM), a static random-access memory (SRAM), a programmable read-only memory (PROM), a read-only memory (ROM), an electrically erasable programmable read-only memory (EEPROM), a magnetic memory, a disk, an optical disk, and the like. The memory 902 is, but is not limited to, any other medium capable of carrying or storing desired program codes in a form of instructions or data structures and that can be accessed by a computer. The memory 902 in the embodiment of the present disclosure may be a circuit or any other device capable of implementing a storage function, for storing program instructions and/or data.

By designing and programming the processor 901, the code corresponding to the method for controlling a braking device introduced in the previous embodiments can be fixed into a chip, so that the chip can implement the method as in the above embodiments when running. How to design and program the processor 901 is a technique well known to those skilled in the art and is not described in detail here.

Those skilled in the art should appreciate that embodiments of the present disclosure may be provided as a method, a system, or a computer program product. Thus, the present disclosure may be implemented by an entirely hardware embodiment, an entirely software embodiment, or an embodiment combining software and hardware. Furthermore, the present disclosure may be implemented as a computer program product embodied on one or more computer-usable storage media (including, but not limited to, a magnetic disk storage, a CD-ROM, or an optical storage) embodying computer-usable program codes therein.

The present disclosure is described with reference to flow charts and/or block diagrams of the method, the device (system), and the computer program product according to the embodiments of the present disclosure. It should be understood that each process and/or block in the flowchart illustrations and/or block diagrams, and combinations of processes and/or blocks in the flowchart illustrations and/or block diagrams, may be implemented by computer program instructions. The computer program instructions may be provided to a processor of a general-purpose computer, a dedicated computer, an embedded processor, or other programmable data processing device to produce a machine, such that the instructions executed by the processor of the computer or other programmable data processing device produce a device for implementing functions specified in one or more processes of the flowcharts and/or one or more blocks of the block diagrams.

The computer program instructions may be stored in a computer readable memory which is capable of guiding the computer or other programmable data processing device to operate in a certain manner, such that the instructions stored in the computer readable memory generate a product including an instruction apparatus which implements the functions specified in one or more processes of the flowcharts and/or one or more blocks of the block diagrams.

These computer program instructions may be loaded onto a computer or other programmable data processing device, causing a series of operating steps to be performed on the computer or other programmable device to produce computer-implemented processing, so that the instructions executed on the computer or other programmable device provide steps for implementing the functions specified in one or more processes of the flowcharts and/or one or more blocks of the block diagrams.

Apparently, various modifications and variations to the embodiments of the present disclosure can be made by those skilled in the art without departing from the spirit and scope of the present disclosure. Hence, as the modifications and variations of the present disclosure fall within the scope of the claims of the present disclosure and equivalents thereof, the present disclosure is also intended to include such modifications and variations.

## Claims

1. A braking device, **characterized by** comprising: a first braking component, a second braking component and at least one third braking component; wherein the first braking component, the at least one third braking component and the second braking component are connected in series;
the first braking component is connected in parallel to the first bus capacitor in an inverter, the second braking component is connected in parallel to the last bus capacitor in the inverter, and each third braking component is connected in parallel to two bus capacitors in the inverter other than the first bus capacitor and the last bus capacitor;
the first braking component and the second braking component each comprise a bridge arm formed by a switching transistor and a diode connected in series, an upper bridge arm of the first braking component is a diode, a lower bridge arm of the second braking component is a diode, a braking resistor is connected in parallel to the diode in the first braking component, and a braking resistor is connected in parallel to the diode in the second braking component; and
each third braking component comprises a first bridge arm and a second bridge arm connected in series, a lower bridge arm of the first bridge arm is a diode, an upper bridge arm of the second bridge arm is a diode, and at least one braking resistor is connected in parallel between the lower bridge arm of the first bridge arm and the upper bridge arm of the second bridge arm.

2. The braking device according to claim 1, wherein the first braking component comprises a first diode, a first braking resistor and a first switching transistor;
a cathode of the first diode is connected to a first terminal of the first bus capacitor and a first terminal of the first braking resistor; an anode of the first diode is connected to a first terminal of the first switching transistor and a second terminal of the first braking resistor; and
a second terminal of the first switching transistor is connected to a second terminal of the first bus capacitor.

3. The braking device according to claim 1, wherein the second braking component comprises a second switching transistor, a second diode and a second braking resistor;
a first terminal of the second switching transistor is connected to a first terminal of the last bus capacitor, and a second terminal of the second switching transistor is connected to a cathode of the second diode; and
a cathode of the second diode is connected to a first terminal of the second braking resistor, and an anode of the second diode is connected to a second terminal of the second braking resistor and a second terminal of the last bus capacitor.

4. The braking device according to any one of claims 1 to 3, wherein each third braking component comprises a third switching transistor, a third diode, a fourth diode, a fourth switching transistor and a third braking resistor;
a first terminal of the third switching transistor is connected to a first terminal of the first bus capacitor of the two bus capacitors connected in parallel to the third braking component, and a second terminal of the third switching transistor is connected to a cathode of the third diode;
a cathode of the fourth diode is connected to an anode of the third diode, and an anode of the fourth diode is connected to a first terminal of the fourth switching transistor;
a second terminal of the fourth switching transistor is connected to a second terminal of the second bus capacitor of the two bus capacitors connected in parallel to the third braking component; and
a first terminal of the third braking resistor is connected to the cathode of the third diode, and a second terminal of the third braking resistor is connected to the anode of the fourth diode.

5. The braking device according to claim 4, wherein the third braking resistor further comprises a third terminal, and the third terminal of the third braking resistor is connected to a middle node of two bus capacitors connected in parallel to the third braking component.

6. The braking device according to claim 4, wherein each third braking component further comprises a fourth braking resistor, the fourth braking resistor is connected between the second terminal of the third braking resistor and the anode of the fourth diode, and the second terminal of the third braking resistor is connected to a middle node of two bus capacitors connected in parallel to the third braking component.

7. A method for controlling a braking device, **characterized in that** the method is applied to the braking device according to any one of claims 1 to 6, and the method comprises:
detecting a bus voltage and an operating state of the inverter, wherein the operating state comprises a fault operating state and a normal operating state;
on detecting that the bus voltage is greater than a first preset threshold and the inverter is in the fault operating state, controlling a corresponding braking component in the inverter to work;
on detecting that the bus voltage is greater than a second preset threshold and the inverter is in the normal operating state, controlling a corresponding braking component in the inverter to work, where the first preset threshold is greater than the second preset threshold.

8. The method according to claim 7, **characterized in that** the method further comprises:
on detecting that the bus voltage is less than a third preset threshold , controlling a corresponding braking component in the inverter to stop working.

9. The method according to claim 8, wherein, on detecting that the bus voltage is greater than a first preset threshold and the inverter is in the fault operating state, the controlling of a corresponding braking component in the inverter to work comprises:
detecting a voltage of each bus capacitor in the inverter; and
controlling a braking component connected to a target bus capacitor to work, on detecting that a voltage across the target bus capacitor is greater than the first preset threshold and the inverter is in the fault operating state.

10. A device for controlling a braking device, **characterized by** comprising:
at least one processor; and a memory communicatively connected to the at least one processor; wherein the memory stores instructions executable by the at least one processor, the instructions are executed by the at least one processor to enable the at least one processor to perform the method for controlling a braking device according to any one of claims 6 to 9.
